**Europäisches Patentamt**

**European Patent Office**

**Office européen des brevets**

(19)

(11) **EP 0 976 003 B1**

(12) **EUROPÄISCHE PATENTSCHRIFT**

(45) Veröffentlichungstag und Bekanntmachung des Hinweises auf die Patenterteilung:
**30.01.2002   Patentblatt 2002/05**

(51) Int Cl.$^7$: **G02B 13/06**, G02B 15/00

(21) Anmeldenummer: **98925443.8**

(86) Internationale Anmeldenummer:
**PCT/DE98/01121**

(22) Anmeldetag: **17.04.1998**

(87) Internationale Veröffentlichungsnummer:
**WO 98/48309 (29.10.1998 Gazette 1998/43)**

(54) **OPTISCHES ABBILDUNGSSYSTEM UND GRAPHISCHE BENUTZERSCHNITTSTELLE**

OPTICAL IMAGING SYSTEM AND GRAPHIC USER INTERFACE

SYSTEME D'IMAGERIE OPTIQUE ET INTERFACE UTILISATEUR GRAPHIQUE

(84) Benannte Vertragsstaaten:
**AT BE CH CY DE DK ES FI FR GB LI**

(30) Priorität: **17.04.1997  DE 19716958**

(43) Veröffentlichungstag der Anmeldung:
**02.02.2000   Patentblatt 2000/05**

(73) Patentinhaber: **Zbig Vision Aktiengesellschaft
10707 Berlin (DE)**

(72) Erfinder: **Rybczynski, Zbigniew
50676 Köln (DE)**

(74) Vertreter: **Hengelhaupt, Jürgen, Dipl.-Ing. et al
Patentanwälte Gulde Hengelhaupt Ziebig, Büro
Berlin-Adlershof Rudower Chaussee 29
12489 Berlin (DE)**

(56) Entgegenhaltungen:
WO-A-96/07269                US-A- 3 514 186
US-A- 4 045 116              US-A- 4 334 245
US-A- 5 563 650

• **SCHRÖDER GOTTFRIED: "Technische optik, 7 Auflage" , VOGEL BUCHVERLAG WÜRZBURG XP002075619 in der Anmeldung erwähnt siehe Seite 127, rechte Spalte, Absatz 3 - Seite 129, rechte Spalte, Absatz 2**

**Beschreibung**

Die Erfindung betrifft ein optisches Abbildungssystem zur Abbildung eines Objekts mit stufenlos einstellbarer Vergrößerung (Zoom) gemäß dem Oberbegriff des Anspruchs 1 sowie eine graphische Benutzerschnittstelle gemäß dem Anspruch 12.

Aus SCHRÖDER, G.: Technische Optik, 7. Aufl., Vogel-Buchverlag Würzburg, S. 128f. ist ein optisches Abbildungssystem in Form eines Varioobjektivs bekannt, das die Abbildung eines Objekts mit stufenlos einstellbarer Vergrößerung ermöglicht.

Das vorbekannte Varioobjektiv besteht im wesentlichen aus mehreren Linsen, wobei zwei der Linsen entlang der optischen Achse verschiebbar sind. Dies ermöglicht zum einen eine stufenlose Änderung der Brennweite und damit der Vergrößerung und zum anderen eine Anpassung der Fokussierung an die geänderte Brennweite, so daß die Bildebene bei einer Änderung der Brennweite unverändert bleiben kann.

Problematisch bei dem vorbekannten Varioobjektiv ist, daß die bei der Abbildung auftretenden Sinus-Fehler mit der je weiligen Brennweiteneinstellung des Varioobjektivs variieren, was insbesondere bei der Überlagerung von Bildern mit unterschiedlichen Brennweiteneinstellungen aufgrund der unterschiedlichen optischen Abbildungsfehler der zu überlagernden Bilder zu einem unnatürlichen Bildeindruck führt.

Der Erfindung liegt somit die Aufgabe zugrunde, ein optisches Abbildungssystem zu schaffen, das die Abbildung eines Objekts mit stufenlos einstellbarer Vergrößerung und von der jeweiligen Vergrößerung unabhängigen Sinus-Fehlern ermöglicht. Weiterhin ist es Aufgabe der Erfindung, eine graphische Benutzerschnittstelle zur multivalenten Bilddarstellung zu schaffen.

Die Aufgabe wird durch die Merkmale der Ansprüche 1 und 12 gelöst.

Die Erfindung schließt die technische Lehre ein, das Objekt zunächst unabhängig von der jeweiligen Brennweiteneinstellung mit konstanter Vergrößerung auf ein zwei-dimensionales Zwischenbild abzubilden und dieses Zwischenbild dann mit der gewünschten Vergrößerung aufzunehmen, damit die bei der Abbildung auftretenden Sinus-Verzerrungen unabhängig von der jeweiligen Brennweiteneinstellung sind.

Der Begriff Objekt ist hierbei und im folgenden allgemein zu verstehen und umfaßt einen einzelnen Gegenstand, eine räumliche Szene sowie eine zweidimensionales Vorlage.

Es wirken bevorzugt diejenigen von dem Objekt ausgehenden Lichtstrahlen bildgebend welche durch einen Knoten-bzw. Brennpunkt verlaufen. Zur Selektion der durch den Knotenpunkt verlaufenden Strahlen aus der Gesamtheit der von den Objekt ausgehenden Strahlen ist gemäß einer theoretischen Betrachtungsweise ein optisches Element vorgesehen, das in einer bevorzugten Ausführungsform als kugelförmige Linse ausgebildet sein kann. Die senkrecht zur Kugeloberfläche auf die kugelförmige Linse auftreffenden Lichtstrahlen erfahren entsprechend dem Brechungsgesetz keine bzw. nur eine geringe Richtungsanderung und verlaufen somit zentral durch den Mittelpunkt der kugelförmigen Linse, während die restlichen Strahlen abgelenkt werden und somit nicht zur Bildgebung beitragen. Die kugelförmige Linse selektiert also die aus einem weitwinkligen Bereich einfallenden und dabei zentral durch ihren Mittelpunkt laufenden Strahlen, so daß der Mittelpunkt der kugelförmigen Linse der Knoten- (Brenn-)punkt der bildgebenden Strahlen ist.

Die Betrachtungsweise ist jedoch nicht auf eine kugelförmige Linse zur Selektion der durch den Knotenpunkt verlaufenden Strahlen beschränkt. So ist beispielsweise auch eine Lochblende oder ein entsprechendes Linsensystem verwendbar. Der Knoten- oder Brennpunkt der bildgebenden Strahlen fällt hierbei mit dem Mittelpunkt der Lochblende zusammen.

Sowohl bei der Verwendung einer kugelförmigen Linse als auch bei der Versendung einer Lochblende zur Selektion der durch einen bestimmten Knotenpunkt verlaufenden Strahlen ist es prinzipiell nicht möglich und für eine hinreichende Lichtstärke auch nicht erwünscht, ausschließlich solche Strahlen zu selektieren, die exakt durch den Knotenpunkt verlaufen. Vielmehr werden auch andere, in der Nähe des Knotenpunkts verlaufende Strahlen bildgebend gebrochen und damit selektiert. Entscheidend für die Funktion des optischen Abbildungssystems ist lediglich, daß das optische Element im Bereich des Knotenpunkts ein eingeschnürtes Strahlenbündel erzeugt.

Weiterhin weist das optische Abbildungssystem bevorzugt ein weiteres, dem ersten nachgeschaltes, optisches Element auf, welches bevorzugt mindestens eine Plankonkavlinse bzw. ein entsprechendes optisches System enthaltendes Linsensystem aufweist, wobei die konkav geformte Seite der Plankonkavlinse dem ersten optischen Element zugewandt ist. Bei einer spezifischen Ausführung ist hierbei die Plankonkavlinse derart angeordnet, daß deren Brennpunkt mit dem Knotenpunkt der bildgebenden Strahlen zusammenfällt, damit die durch den Knotenpunkt verlaufenden Strahlen nach der Ablenkung durch die Plankonkavlinse parallel zur optischen Achse verlaufen. Die Plankonkavlinse erzeugt also aus einem divergierenden Strahlenbündel parallele Strahlen, die rechtwinklig zur planen Fläche der Plankonkavlinse verlaufen.

Gemäß der theoretischen Betrachtungsweise ist der Radius der Kugelförmige Linse gleich dem Krümmungsradius der Plankonkavlinse, so daß sich die kugelförmige Linse auf der dem Objekt abgewandten Seite in die konkave Einwölbung der Plankonkavlinse bzw. ein entsprechendes optisches System einpaßt und mit dieser eine Einheit bildet.

Von Bedeutung ist bei dieser Betrachtungsweise, daß der Brechungsindex der Plankonkavlinse bzw. des entsprechenden optischen Systems von dem Brechungsindex der kugelförmigen Linse abweicht, da die Lichtstrahlen andernfalls an der Grenzfläche zwischen Kugelförmige Linse und Plankonkavlinse nicht gebrochen würden.

Gemäß dieser Betrachtungsweise ist die Plankonkavlinse (bzw. das entsprechende, die vom Objekt ausgehenden Strahlen zu einer ebenen Bildarstellung führende optische Element) auf ihrer planen Seite mit einer Zwischenbildebene, vorzugsweise in Form einer Diffusorschicht, versehen, die die Erzeugung eines Zwischenbildes aus den parallel gerichteten Strahlen ermöglicht. Diese Zwischenbildebene, vorzugsweise in Form einer Diffusorschicht, kann entweder unmittelbar auf die plane Oberfläche der Plankonkavlinse aufgebracht sein oder aus einer separaten Diffusorplatte bestehen.

Dieses optische Abbildungssystem selektiert also zunächst aus der Gesamtheit der von dem Objekt ausgehenden Lichtstrahlen im wesentlichen die durch einen bestimmten Knotenpunkt verlaufenden Strahlen. Diese Lichtstrahlen werden dann durch ein entsprecherdes optisches System, symbolisiert durch die Plankonkavlinse, parallel gerichtet und erzeugen auf der Zwischenbildebene, vorzugsweise in Form einer Diffusorschicht, ein Zwischenbild, welches einen weitwinkligen Bildausschnitt in ortografischer Projektion wieder gibt.

Dieses Zwischenbild wird dann mittels einer Abbildungsoptik fester Brennweite auf eine parallel zur Zwischenbildebene, vorzugsweise in Form einer Diffusorschicht, ausgerichtete photosensitive Abbildungsfläche abgebildet, die beispielsweise aus einem lichtempfindlichen Film oder einem CCD-Sensorelement als Target besteht. Die Blendenebene befindet sich zwischen Zwischenbildebene und Abbildungsebene, also - vom Objekt her gesehen - jenseits des Fokus des ersten optischen Elements.

Zur Einstellung der Brennweite und/oder zur Fokussierung des auf der Abbildungsebene erscheinenden Bildes ist die Abbildungsoptik und/oder die Abbildungsebene parallel zur optischen Achse verschiebbar angeordnet. Durch eine Verschiebung der Abbildungsoptik und/oder der Abbildungsebene parallel zur optischen Achse lassen sich somit die Vergrößerung und damit der Bildausschnitt des auf der Abbildungsebene erscheinenden Bild stufenlos einstellen. Die Anordnung wirkt wie ein Zoom-Objektiv, wobei die Verzerrung unabhängig von der "Brennweiteneinstellung" ist und damit nicht korrigiert zu werden braucht. Der Brennpunkt des ersten optischen Elements befindet sich vor der Blendenebene.

In der einfachsten Ausführungsform besteht die Abbildungsoptik aus einer einzelnen Linse, die parallel zur optischen Achse des Abbildungssystems verschiebbar ist, jedoch werden in der Regel Linsen-Abbildungssysteme mit mehreren Einzellinsen Verwendung finden.

Da die Abbildungsoptik bei dem erfindungsgemäßen optischen Abbildungssystem nicht das in der Regel dreidimensionale Objekt selbst, sondern das auf der Zwischenbildebene, vorzugsweise in Form einer Diffusorschicht, erscheinende zweidimensionale Zwischenbild abbildet, sind die Sinus-Verzerrungen vorteilhaft unabhängig von der jeweiligen Einstellung der Vergrößerung.

Ein weiterer Vorteil des erfindungsgemäßen optischen Abbildungssystems ist darin zu sehen, daß sich die auf diese Weise gewonnenen Bilder auch mit Bildern anderer Blickwinkel und anderer Brennweiten-Einstellungen unter Erhaltung eines natürlichen Bildeindrucks überlagern lassen, ohne daß an den Bildrändern aufgrund der Überlagerung störende Verzerrungen in Erscheinung treten, da die Bildgeometrie für alle Einstellungen übereinstimmt.

In einer bevorzugten Ausführungsform der Erfindung ist die Abbildungsoptik in einem parallel zur optischen Achse des Abbildungssystems ausgerichteten und um seine Längsachse drehbaren Tubus angeordnet. An der Innenseite des Tubus befinden sich hierbei Mitnehmer, die bei einer Drehung des Tubus das Bestreben haben, eine oder mehrere Linsen der Abbildungsoptik mitzudrehen. Da diese Linsen jedoch gegen eine Verdrehung gesichert und nur in axialer Richtung beweglich sind, erfolgt bei einer Drehung des Tubus eine axiale Ausweichbewegung der Linsen. Durch eine Drehung des Tubus ist es also möglich, zur Abbildungsoptik gehörende Linsen in axialer Richtung zu verschieben und damit die Vergrößerung des optischen Abbildungssystems einzustellen.

In einer vorteilhaften Variante der Erfindung ist eine automatisch arbeitende Scharfeinstellvorrichtung vorgesehen, die die Abbildungsoptik in Abhängigkeit von der eingestellten Vergrößerung auotmatisch scharf einstellt. Auf diese Weise entfällt bei einer Änderung der Vergrößerung die manuelle Anpassung der Fokussierung.

Eine Möglichkeit zur Fokussierung besteht darin, eine oder mehrere Linsen entlang der optischen Achse des Abbildungssystems so zu verschieben, daß die Abbildungsebene in der Bildebene liegt.

Eine andere Möglichkeit sieht dagegen vor, die Abbildungsebene selbst zu verschieben, damit Bildebene und Abbildungsebene zusammenfallen.

In beiden Fällen erhält die Fokussierungsvorrichtung als Eingangsgröße die axiale Stellung der verschiebbaren Teile des optischen Abbildungssystems und berechnet daraus die zur Fokussierung erforderliche Verschiebung der Abbildungsebene bzw. einer oder mehrerer Linsen.

Andere vorteilhafte Weiterbildungen der Erfindung sind in den Unteransprüchen gekennzeichnet bzw. werden nachstehend zusammen mit der Beschreibung von Ausführungsbeispielen der Erfindung anhand der Figuren näher dargestellt. Es zeigen:

Figur 1      in theoretischer Betrachtungsweise ein optisches Abbildungssystem in perspektivischer Darstellung,

Figur 2      den Strahlengang in einem theoretischen Modell des optischen Abbildungssystems aus Figur 1 im Querschnitt sowie

Figur 3      die Konstruktion eines Strahls in dem optischen Abbildungssystem der Figuren 1 und 2 exemplarisch für einen Objektpunkt.

Figur 4      Blockdarstellung des Systems

Figur 5      Geometrie der geradlinigen Projektion

Figur 6      Geometrie der orthographischen Projektion

Figur 7      Objektabbildhöhe ho gegen Objekthöhe h bei geradliniger Projektion

Figur 8      Objektabbildhöhe ho gegen Objekthöhe h bei orthographischer Projektion

Figur 9      Objektabbildhöhe h'o gegen Abweichungswinkel $\delta$ bei geradliniger Projektion

Figur 10    Objektabbildhöhe h'o gegen Abweichungswinkel $\delta$ bei orthographischer Projektion

Figur 11    Blickwinkel $\alpha$'ob gegen Abweichungswinkel $\delta$ bei geradliniger Projektion

Figur 12    Blickwinkel $\alpha$'ob gegen Abweichungswinkel $\delta$ bei orthographischer Projektion

Figur 13    Schematische Szenenansicht - Standort des Projektionssystems gemäß Beispiel Szene mit Objekten Projektionssystem

Figur 14    In der in Fig. 13 dargestellten Situation aufgenommene Bilder:

                a) geradliniges Projektionssystem mit kleinem Blickwinkel;
                b) geradliniges Projektionssystem mit großem Blickwinkel;
                c) orthographisches Projektionssystem mit kleinem Blickwinkel;
                d) orthographisches Projektionssystem mit großem Blickwinkel

Figur 15    Schematische Ansicht eines orthographischen Zoomlinsensatzes

Figur 16    Verfahren der Strahlrichtungsbeschreibung für den orthographischen Linsensatz

Figur 17    Bilderzeugungsprozeß beim orthographischen Linsensatz

Figur 18    Verfahren zur Änderung des Blickwinkels des orthographischen Zoomlinsensatzes

Figur 19    Maximaler Blickwinkel $\gamma$ des orthographischen Zoomlinsensatzes gegen Abstand d zwischen Linse L2 und Bildschirm S1

Figur 20    Verfahren zur Positionierung und Ausrichtung der Kamera

              Drehwinkel (Pan)
              Kippwinkel (Tilt)
              Rollwinkel (Roll)

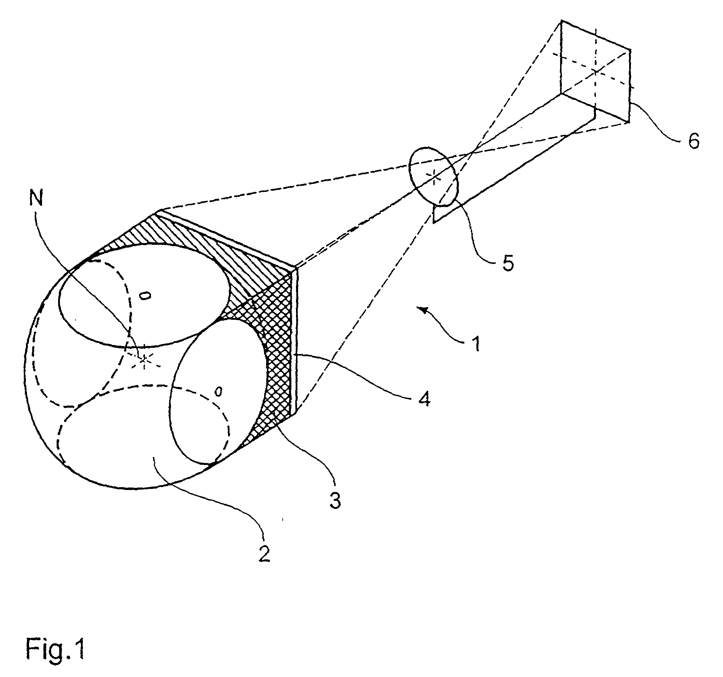

Das in Figur 1 dargestellte optische Abbildungssystem 1 zeigt eine verzerrungsarme Abbildung einer räumlichen Szene mit einer stufenlos einstellbaren Vergrößerung. Wegen der weitgehenden Unterdrückung von tonnen- oder kissenförmigen Verzerrungen lassen sich die von dem optischen Abbildungssystem 1 aufgenommenen Bilder in einfacher Weise überlagern, ohne daß beispielsweise die Verzerrung in dem resultierenden Bild störend in Erscheinung tritt. Die Darstellung erfolgt vorzugsweise ortografisch.

In Fig.1 weist das optische Abbildungssystem 1 ein ein erstes optisches Element bildende kugelförmige Linse 2 auf, die an ihrer Außenfläche einseitig mit einer ein zweites optisches Element bildenden Plankonkavlinse 3 verbunden ist. Der Krümmungsradius dieser Plankonkavlinse 3 ist gleich dem Radius der kugelförmige Linse 2, die sich somit exakt in die konkave Einwölbung der Plankonkavlinse 3 einpaßt und mit dieser eine Einheit bildet. Zur Verringerung der Baugröße ist die kugelförmige Linse 2 seitlich sowie an der ober- und Unterseite abgeflacht, so daß die Einheit aus kugelförmige Linse 2 und Plankonkavlinse 3 bis auf die objektseitige sphärische Kugelfläche eine nahezu rechteckige Bauform aufweist. Die kugelförmige Linse weist ermöglicht die Verarbeitung weitwinklig einfallender optischer Strahlung, so daß ein großer Bildwinkel erzielbar ist.

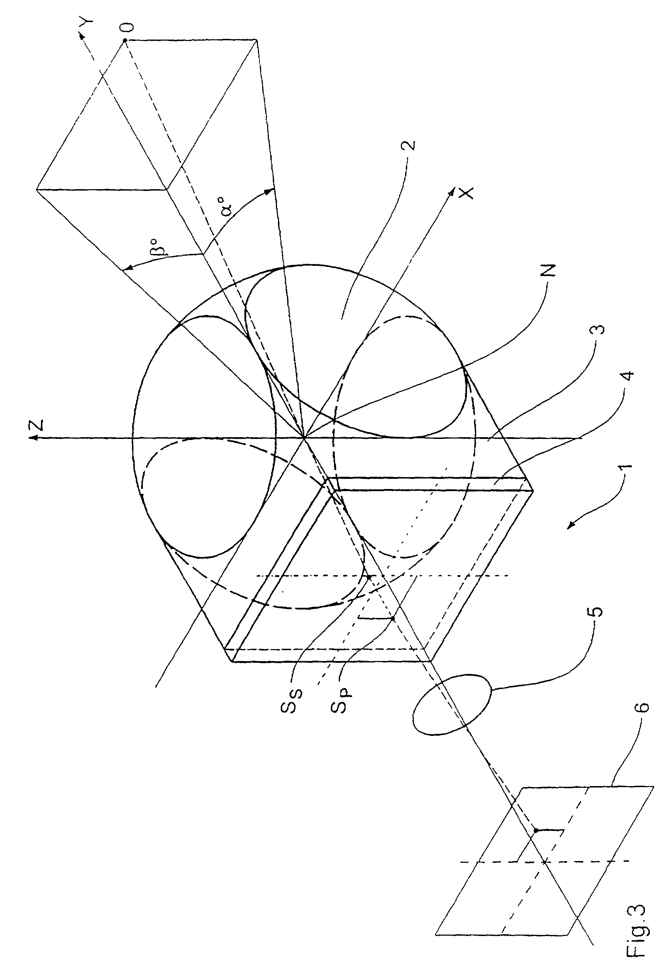

Fig.3 zeigt, daß die zentral durch die Kugelförmige Linse 2 hindurchlaufenden Strahlen nach der Ablenkung an der Grenzfläche zwischen Kugelförmige Linse 2 und Plankonkavlinse 3 parallel zur optischen Achse verlaufen.

Die auf diese Weise parallel gerichteten Lichtstrahlen treffen dann rechtwinklig auf die plane Fläche der Plankonkavlinse 3 und erzeugen auf der dort aufgebrachten Diffusorschicht 4 ein Zwischenbild.

Die Lichtstrahlen, die von den Objektpunkten der darzustellenden räumlichen Szene ausgehen, treten also durch die sphärische Außenfläche der kugelförmigen Linse 2 in das optische Abbildungssystem ein, laufen zentral durch den Mittelpunkt N der kugelförmigen Linse 2 und werden dann an der Grenzfläche zwischen kugelförmiger Linse 2 und Plankonkavlinse 3 parallelgerichtet, so daß auf der Diffusorschicht 4 ein Bild der räumlichen Szene erscheint.

Das auf der Diffusorschicht 4 erscheinende Bild gibt die räumliche Szene jedoch mit konstanter Vergrößerung wieder und dient lediglich als Zwischenbild für die Erzeugung von Bildern mit stufenlos einstellbarer Vergrößerung. Hierzu ist hinter der Diffusorschicht 4 eine Kamera 5, 6 mit auto matischer Scharfeinstellung angeordnet, die entlang der optischen Achse des Abbildungssystems verschiebbar ist und somit das auf der Diffusorschicht erscheinende Bild mit stufenlos einstellbarer Vergrößerung auf den Kamerafilm 6 abbildet. Die Kamera besteht in der hier dargestellten einfachsten Ausführungsform aus einem lichtempfindlichen Film 6 und einer zwischen der Diffusorschicht 4 und dem Film 6 angeordneten Linse 5, die mit ihrer optischen Achse rechtwinklig zur Filmebene ausgerichtet und zur Einstellung der Vergrößerung entlang der optischen Achse verschiebbar ist. Da die Kamera 5, 6 stets das auf der Diffusorschicht 4 erscheinende zweidimensionale Zwischenbild abbildet und nicht die räumliche Szene selbst, sind die bei der Abbildung auftretenden Sinus-verzerrungen unabhängig vom Vergrößerungsfaktor bzw. der Zoom-Position der Kamera 5, 6.

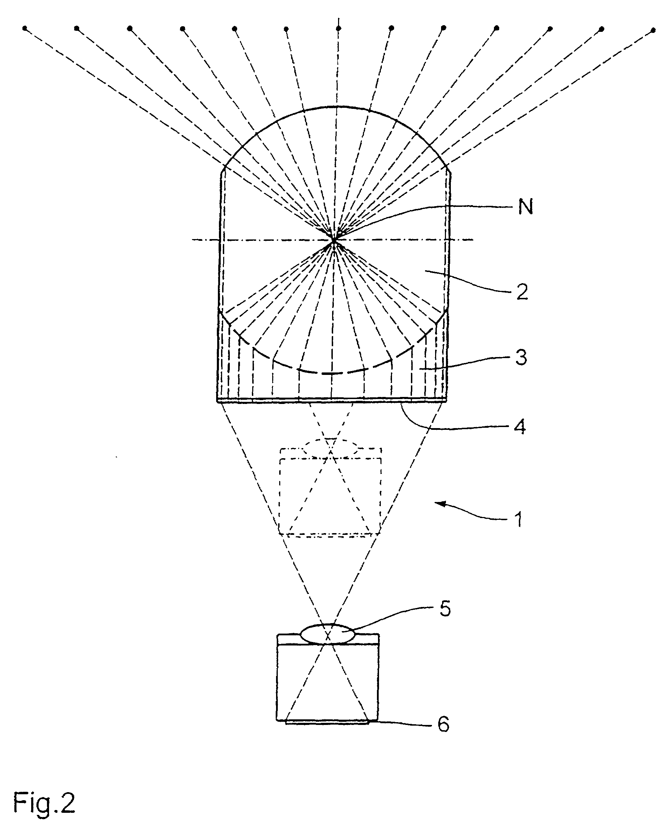

Der Strahlengang in dem vorstehend beschriebenen optischen Abbildungasystem ist gemäß der theoretischen Betrachtungsweise detailliert aus der Querschnittsdarstellung in Figur 2 ersichtlich, wobei zur Vereinfachung sowie zur Wahrung der Übersichtlichkeit nur die von einzelnen äquidistant angeordneten Objektpunkten ausgehenden Strahlen dargestellt sind. Diese Strahlen treten durch die sphärische Außenfläche der Kugelförmige Linse 2 in das optische Abbildungssystem ein und laufen zentral durch deren Mittelpunkt N. Auf der gegenüberliegenden Seite treffen die Strahlen dann auf die Grenzfläche zwischen der Kugelförmige Linse 2 und der Plankonkavlinse 3. Da der Brennpunkt der Plankonkavlinse 3 im Mittelpunkt N der Kugelförmige Linse 2 liegt und die auf die Grenzfläche auftreffenden Strahlen zentral durch die Kugelförmige Linse 2 und damit durch den Brennpunkt N der Plankonkavlinse 3 verlaufen, werden die Strahlen von der Plankonkavlinse 3 parallel gerichtet und treffen somit rechtwinklig auf die Diffusorschicht 4, die auf der planen Fläche der Plankonkavlinse 3 aufgebracht ist, so daß auf der Diffusorschicht 4 ein Bild der räumlichen Szene erscheint, das unabhängig von der jeweiligen Vergrößerung ist.

Hinter der Diffusorschicht 4 ist erfindungsgemäß eine Kamera 5, 6 mit fester Brennweite angeordnet, die entlang der optischen Achse des Abbildungssystems verschiebbar ist und somit eine Abbildung des auf der Diffusorschicht 4 erscheinenden Bildes mit stufenlos einstellbarer Vergrößerung ermöglicht. Hierzu wird die Kamera 5, 6 entlang der optischen Achse verschoben und in der Position mit dem gewünschten Vergrößerungsfaktor und dem sich daraus ergebenden Bildausschnitt fokussiert. In der Kamera befindet sich ein Blende, die in der Zeichnung nicht wiedergegeben ist. Die Blende ist damit - vom Objekt her gesehen - jenseits des Knoten- oder Brennpunkts angeordnet.

Die mathematisch-geometrische Konstruktion des Strahlenverlaufs ist in Figur 3 exemplarisch anhand des von einem Objektpunkt O ( $O_X$, $O_Y$, $O_Z$) ausgehenden Lichtstrahls dargestellt. Dieser Lichtstrahl durchläuft den Mittelpunkt N der Kugelförmige Linse unter dem Elevationswinkel $\beta°$ und dem Azimuthwinkel $\alpha°$. Der Elevationswinkel $\beta°$ ist hierbei der Winkel zwischen dem einfallenden Lichtstrahl und der Horizontalebene, während der Azimuthwinkel $\alpha°$ den Winkel zwischen der senkrechten, parallel zur optischen Achse verlaufenden Ebene und dem einfallenden Strahl beschreibt.

Azimuthwinkel $\alpha_o$ und Elevationswinkel $\beta_o$ errechnen sich hierbei aus den Koordinatenwerten $O_X$, $O_Y$, $O_Z$ des Objektpunkts P nach den Formeln

$$\alpha_o = \arctan \frac{O_X}{O_Y}$$

$$\beta_o = \arctan \frac{O_z}{O_Y}$$

Der einfallende Lichtstrahl durchläuft die kugelförmige Linse 2 dann zentral und trifft auf der gegenüberliegenden Seite im Punkt Ss auf die sphärische Grenzfläche zwischen der Linse 2 und der Plankonkavlinse 3, deren Brennpunkt mit dem Mittelpunkt N der Kugelförmige Linse zusammenfällt, so daß die zentral durch die kugelförmige Linse 2 verlaufenden Strahlen von der Plankonkavlinse 3 parallel gerichtet werden.

Der von dem Objektpunkt O ausgehende Strahl wird deshalb von der Plankonkavlinse 3 abgelenkt, verläuft anschließend parallel zur optischen Achse und trifft schließlich im Punkt SP auf die Diffusorschicht 4. Die Koordinatenwerte $S_{PX}$, $S_{Pz}$ dieses Punktes SP errechnen sich hierbei aus Azi muthwinkel $\alpha$ und Elevationswinkel $\beta$ des einfallenden Strahls nach folgenden Formeln:

$$S_{PX} = -\sin\alpha \; \cos\beta$$

$$S_{Pz} = -\cos\alpha \; \sin\beta$$

Das auf der Diffusorschicht 4 erscheinende Bild weist hierbei eine konstante Vergrößerung auf und dient deshalb lediglich als Zwischenbild zur Erzeugung eines Bildes mit stufenlos einstellbarem Vergrößerungsfaktor. Die auf der Diffusorschicht 4 erscheinenden Bildpunkte werden hierzu durch eine Linse 5 auf die Filmebene 6 abgebildet, wobei sich die Koordinatenwerte $P_X$, $P_z$ des zu dem Objektpunkt O korrespondierenden Bildpunkts P in der Filmebene 6 nach folgenden Formeln errechnen:

$$P_X = \sin\alpha \; \cos\beta \; f = - \; S_{PX} \; f$$

$$P_z = \cos\alpha \; \sin\beta \; f = -S_{Pz} \; f$$

Der Faktor F ergibt sich dabei aus dem Radius r der Kugelförmige Linse 2 und der Breite b der Abbildungsebene 6 in der Filmebene:

$$f = \frac{b}{r}$$

Mit der Erfindung lassen sich unterschiedliche Bildausschnitte wiedergeben, wobei das Linsensystem für sämtliche Bildausschnitte korrigiert bleibt.

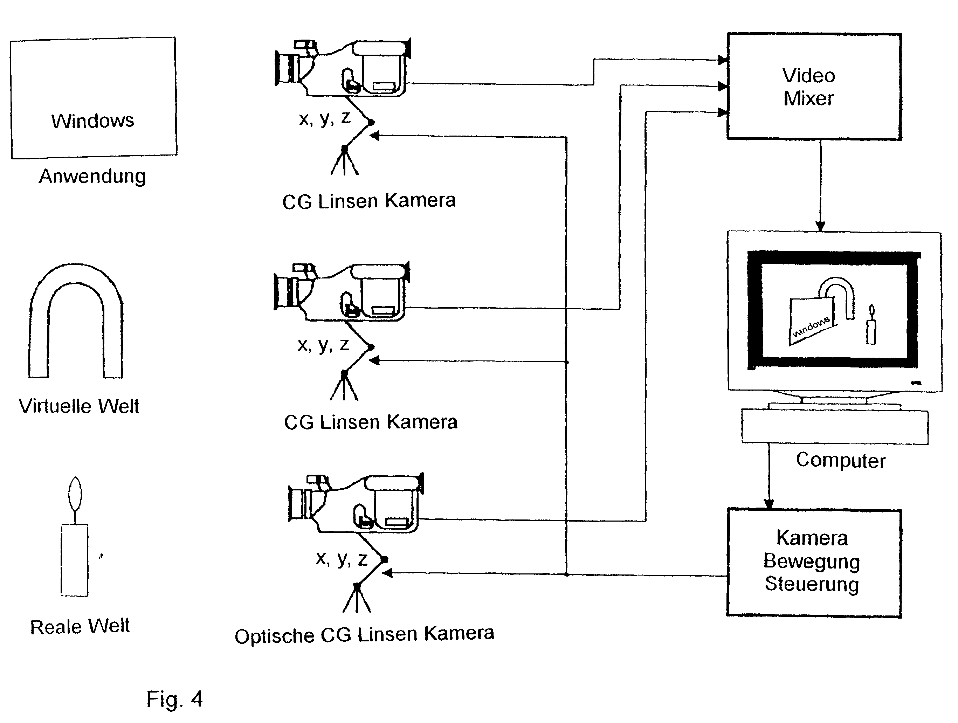

In der folgenden Beschreibung soll anhand von Ausführungsbeispielen ein neuer Typ einer grafischen Benutzerschnittstelle charakterisiert werden, die es ermöglichen soll, auf einem Computer terminal Abbilder von Objekten der realen Welt, der virtuellen Welt sowie andere Rechneranwendungen darzustellen. Fig. 4 zeigt eine Blockdarstellung der Schnittstelle.

Die Bestandteile eines auf einer Schnittstellen-Ausgabeplattform (typischerweise einem Computermonitor) darzustellenden Bildes werden von einem Kamerasatz erzeugt, der unter Verwendung eines orthographischen Abbildungssystems (oder dessen Mcdell) konstruiert ist. Der Kamerasatz umfaßt reale Kameras, die auf Objekte der realen Welt gerichtet sind, und virtuelle, mit Hilfe von Computer-Erweiterungskarten geschaffene Kameras, die auf virtuelle Objekte und Computeranwendungen gerichtet sind. Die vom Kamerasatz erzeugten Bilder werden in einen Videomischer eingegeben, der einen Bestandteil der Schnittstelle bildet. Der Videomischer erzeugt die fertigen Bilder, die dann an eine Schnittstellen-Ausgabeplattform geschickt werden können. Die Kanerapositionen werden von einem Schnittstellensystem für die Kamerasteuerung gesteuert.

Um die Kommunikation zwischen Benutzer und System zu gewährleisten, ist die Schnittstelle mit Eingabe- und Ausgabeplattformen ausgestattet Die Eingabeplattform ermöglicht es, die Bestandteile des Ergebnisbildes zu manipulieren und Meldungen an die im System installierten Anwendungen zu erzeugen. Die Ausgabeplattform ermöglicht es, die Ergebnisbilder darzustellen und damit u.a. den Zustand der installierten Anwendungen sichtbar zu machen.

Die Schnittstelle ermöglicht die freie Gestaltung der Bewegungspfade der Kameras sowie deren Blickrichtungen und -winkel, Jede Kamera im System kann unabhängig von oder synchron mit anderen Kameras aktiviert werden. Im Ergebnis der Schnittstellentätigkeit läßt sich jedes gewünschte Bild auf dem Bildschirm darstellen.

Nun sollen zwei grundlegende Merkmale hervorgehoben werden, die die hier vorgestellte Schnittstelle von anderen derzeitigen grafischen Benutzerschnittstellen unterscheiden. Erstens wird das Ergebnisbild durch die Anwendung der orthographischen Projektion erzielt, die im Gegensatz zur gewöhnlichen geradlinigen Projektion perfekt die Art und Weise wiedergibt, in der ein menschliches Auge die Umwelt sieht (der Vergleich zwischen geradliniger und orthographischer Projektion wird im Folgenden noch näher dargestellt). Zweitens ermöglicht das System die Schaffung eines endgültigen Bildes ohne Einschränkungen. Dieses Bild kann Abbilder von Objekten der realen Welt, von Objekten einer virtuellen Welt sowie Computeranwendungen enthalten. All diese Abbilder können sich dank des Bewegungssteuersystems und der Nutzung des Videomischers innerhalb des Ergebnisbildes beliebig verändern und bewegen. Das Bewegungssteuersystem ist in der Lage, die Positionen und Richtungen der Kameras zu steuern, und, was noch wichtiger ist, die Bewegungen sowohl der einzelnen Kameras als auch der Kamerasätze mit der gleichen Präzision zu wiederholen (in diesem Fall bei Bedarf synchron). Das KameraBewegungssteuersystem wird ebenfalls im Folgenden noch näher beschrieben. Der Videomischer bietet moderne Bildbearbeitungsverfahren zur freien Manipulation der Bildbestandteile in der Arbeitsumgebung.

Hinsichtlich der logischen Systemstruktur weist die Schnittstelle folgende Bestandteile auf:

- ein System von Computergrafik-(CG)-Linsenkameras (zur "Beobachtung" virtueller Welten und Anwendungen) auf der Grundlage des Modells eines Satzes orthographischer Zoomlinsen;
- ein Bewegungssteuersystem für CG-Linsenkameras;
- ein System von Kameras mit optischen Linsen (zur Beobachtung der realen Welt), ausgestattet mit orthographischen Zoomlinsensätzen;
- ein Bewegungssteuersystem für Kameras mit optischen Linsen;
- Videomischer;
- Eingabeplattform;
- Ausgabeplattform;
- eine 3-D Organisation des Computerspeichers basierend auf den kartesischen Raum (YXYZ). Dieser 3-D Speicher wird auf dem Bildschirm als ein Bild einer 3-D virtuellen Welt dargestellt. Die graphische Schnittstelle jeder Software hat in dieser Welt eine einzige Position im Raum. Die Darstellung dieser Welt auf dem Bildschirm erfolgt mittels orthographischer CG-Linse, welche ein integrierter Teil der Graphikkarte (Hardware) ist;
- ein Link von diesem Speicher (Computer kartesischer Raum) mit GPS-(global kartesischer Raum) System.

Unter einer CG-Linsenkamera verstehen wir eine Computer-Erweiterungskarte mit entsprechender Software, die in der Lage ist, aus der Beobachtung einer dreidimensionalen virtuellen Welt zweidimensionale Bilder zu konstruieren. Der Bildkonstruktionsprozeß verläuft gemäß den Funktionsprinzipien des orthographischen Zoomlinsensatzes. Die virtuelle 3D-Welt kann virtuelle 3D-Objekte, die unter Nutzung von Szenenmodellierverfahren im kartesischen Raum modelliert wurden, und Computeranwendungen (z. B. Windows 95, AutoCAD, XWindow) enthalten, die durch virtuelle Bildschirme repräsentiert werden, die beliebig in einem virtuellen Raum angeordnet sein können. Diese Bildschirme stellen ein Kommunikationsmittel zwischen den Anwendungen und einem Benutzer dar.

Eine CG-Linsenkamera wird durch drei Parameter charakterisiert: einen Blickwinkel, einen Standpunkt und eine Blickrichtung. Diese Parameter definieren eindeutig die Art und Weise, in der die Kamera die virtuelle Welt wahrnimmt.

Unter einer optischen Linsenkamera verstehen wir eine reale Kamera, die es analog zu einer CG-Linsenkamera gestattet, zweidimensionale Bilder der realen Welt zu erzeugen. In der Schnittstelle verwendete Kameras mit optischen Linsen sind mit orthographischen Zoomlinsensätzen ausgestattet.

Wie im obigen Fall, ist auch eine optische Linsenkamera durch einen Blickwinkel, einen Standpunkt und eine Blickrichtung eindeutig charakterisiert.

Die Bewegungssteuerung der Kamera erfolgt über eine Computer-Erweiterungskarte mit entsprechender Software mittels geeigneter mechanischer Manipulatoren zum Betrieb optischer Linsenkameras (falls diese im System vorhanden sind). Diese Karte ermöglicht es, nach dem Willen des Benutzers Sequenzen von Kamerastellungen zu berechnen und dann umzusetzen, um die Kamera(s) entlang vorgeschriebener Pfade zu bewegen. Auf diese Weise lassen sich beide im System verwendeten Kameratypen - virtuelle und reale -beliebig positionieren und so beliebige Bewegungsabläufe komponieren.

Die von den Systemkameras erzeugten Bilder werden als Eingaben zum Videomischer geschickt. Der Mischer führt die Eingabebilder zusammen und erzeugt daraus Ergebnisbilder, die an die Schnittstellen-Ausgabeplattform geschickt werden können. Die Fähigkeiten des Mischers bestimmen weitgehend die Fähigkeiten des Gesamtsystems. Wenn das System nur eine einzige Linsenkamera verwendet, kann der Videomischer weggelassen werden.

Die Aufgabe einer Schnittstellen-Eingabeplattform besteht darin, die Kommunikation in der Richtung Benutzer System zu ermöglichen. Diese Plattform besteht aus grundlegenden Eingabegeräten wie Tastaturen, Mäusen, Joysticks usw. oder komplizierteren Geräten wie Sprachanalysatoren, die Meldungen zur Steuerung des Systems über die Schnittstelle erzeugen. Es gibt zwei Typen derartiger Meldungen:

- Schnittstellenmeldungen, die das Aussehen des zu einer Ausgabeplattform geschickten Ergebnisbildes modifizieren;
- Anwendungsmeldungen, die zur weiteren Verarbeitung an die im System installierten Anwendungsprogramme übermittelt werden.

Die Aufgabe einer Schnittstellen-Ausgabeplattform besteht darin, die Kommunikation in der Richtung System Benutzer zu ermöglichen. Jedes Videogerät (oder ein Satz von Videogeräten) zur Sichtbarmachung des aktuellen Schnittstellenzustandes (der den Zustand des Gesamtsystems widerspiegelt) übernimmt die Rolle der Schnittstellen-Ausgabeplattform.

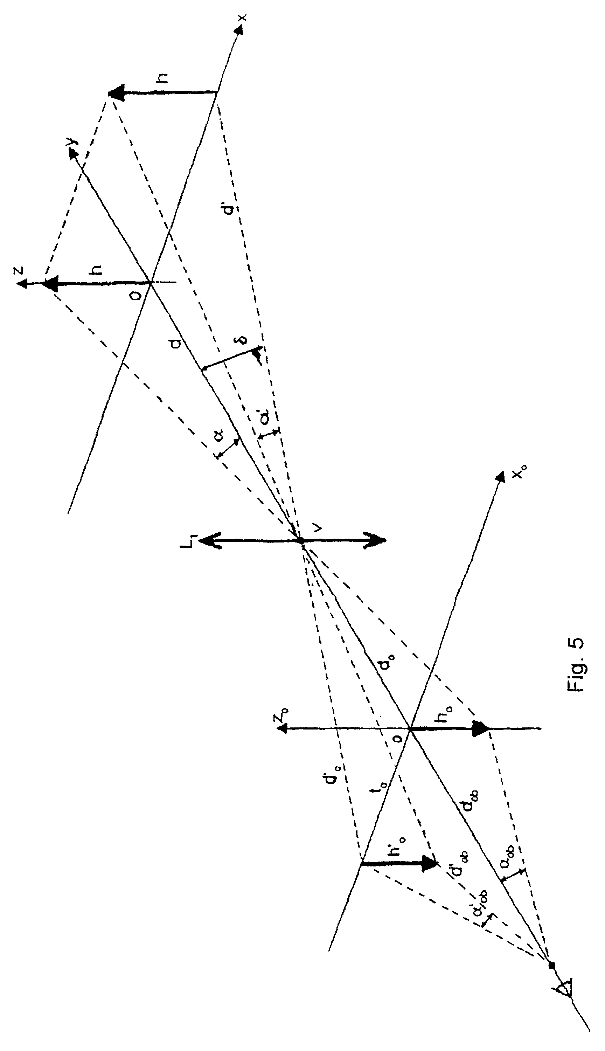

Im folgenden Abschnitt werden die Bildmerkmale verglichen, die sich aus der Verwendung der geradlinigen bzw. der orthographischen Projektion ergeben. Angenommen, wir verfügen über das in Fig. 5 dargestellte geradlinige Projektionssystem. Wir wollen wissen, in welcher Weise die Bildhöhe $h_o$ von der Objekthöhe $h$ in dem Fall abhängt, daß sich das Objekt in der optischen Achse y des Systems befindet. In der betrachteten Situation ist dies eine unmittelbare Konsequenz des Tale-Theorems, daß

$$h_o = \frac{d_o h}{d}, \qquad (1)$$

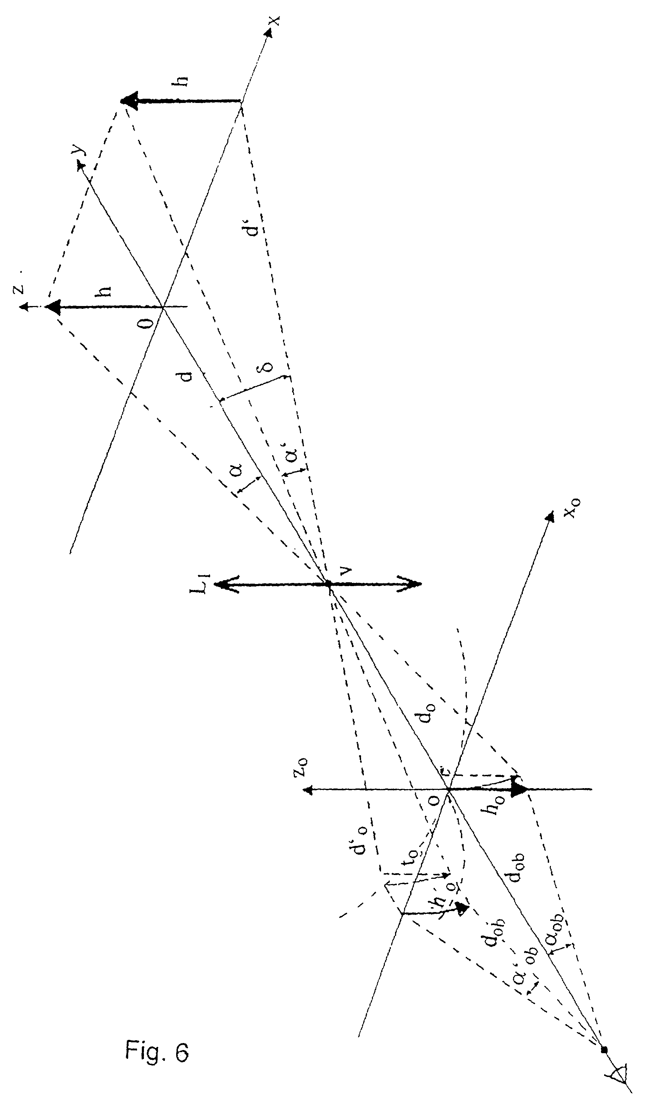

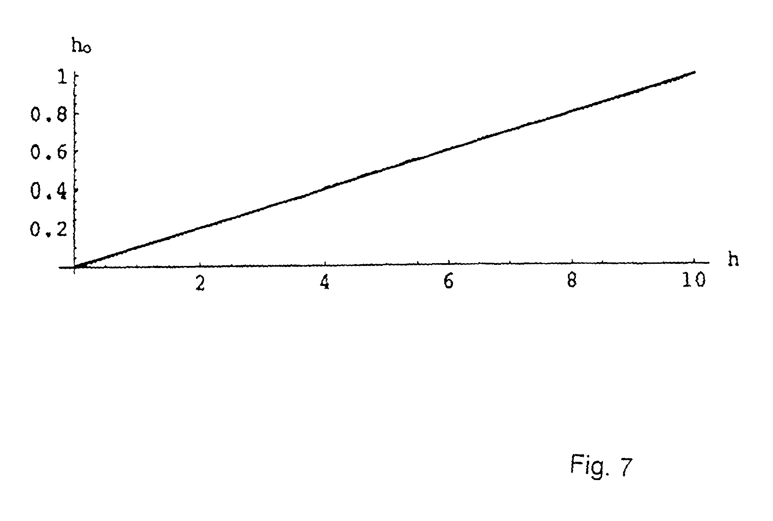

Fig. 7 zeigt die oben dargestellte Abhängigkeit, wobei die Systemparameter $d_o$ und $d$ als Konstanten festgesetzt sind. Bei einem orthographischen Projektionssystem (dargestellt in Fig. 6) wird die analoge Abhängigkeit durch die Formel

$$h_o = \frac{d_o h}{\sqrt{d^2 + h^2}} \qquad (2)$$

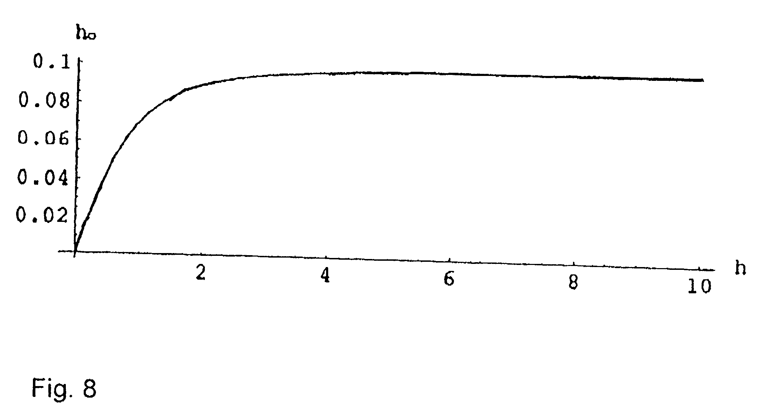

bestimmt. Ein Diagramm der Bildhöhe $h_o$ gegenüber der Objekthöhe $h$ ist in Fig. 8 dargestellt. Man erkennt sofort, daß bei der geradlinigen Projektion die Bildhöhe proportional zur Objekthöhe ist, wobei ein Koeffizient von den Parametern des Projektionssystems abhängt. Bei der orthographischen Projektion ist dies nicht so. In diesem Fall ist bei geringen Objekthöhen (bis zu einigen zehn Prozent des Projektionssystemparameters $d_o$) die Bildhöhe $h_o$ noch annähernd proportional zur Objekthöhe $h$. Allgemein ist in diesem Fall festzustellen, daß die Bildhöhe um so langsamer zunimmt, je größer die Objekthöhe ist. Theoretisch ist die größtmögliche Bildhöhe bei dieser Projektionsart gleich $d_o$ (das Diagramm in Fig. 8 wurde mit $d_o = 0,1$ berechnet).

Das gleiche Phänomen ist festzustellen, wenn die beobachteten Objekte aus der optischen Achse y des orthographischen Projektionssystems herausbewegt werden. In dieser Situation interessiert uns die Bildhöhe $h'_o$ von Objekten mit konstanter Höhe $h$, die sich an unterschiedlichen Positionen auf der Ebene x0z senkrecht zur optischen Achse y des Systems befinden. Berechnen wir die Abhängigkeit der Höhe $h'_o$ vom Abweichungswinkel $\delta$ (dem Winkel, aus dem vom Standpunkt v aus die Objektgrundfläche gesehen wird). Zu Vergleichszwecken betrachten wir zunächst den Fall der geradlinigen Projektion. Wenn das Objekt so aus der optischen Achse des Systems herausbewegt wird, daß vom Standpunkt v aus im Winkel $\delta$ auf seine Grundfläche geblickt wird, so wächst der Abstand d' zwischen dem realen Objekt und dem Projektionssystem gemäß der Formel

$$d' = \frac{d}{\cos\delta} \qquad (3)$$

In gleicher Weise wird der Abstand $d'_o$ durch die Formel

$$d'_o = \frac{d_o}{\cos\delta} \qquad (4)$$

bestimmt. Wenn wir die Gleichungen (3) und (4) in die Gleichung (2) einsetzen, erhalten wir

$$h'_o = \frac{d_o h}{d} \tag{5}$$

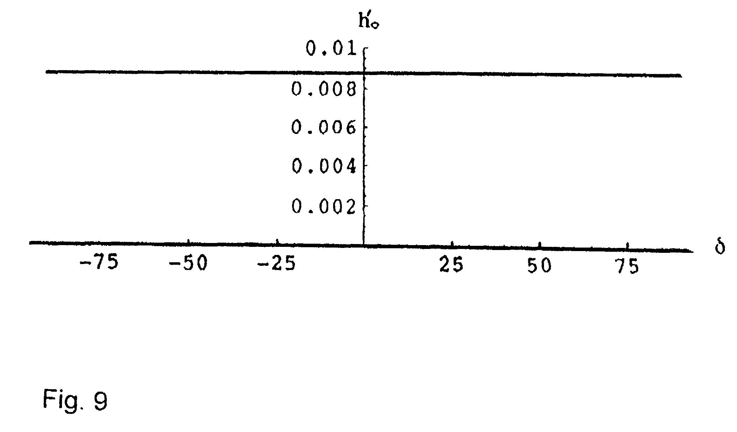

Es ist ohne weiteres zu beobachten, daß die Bildhöhe $h'_o$ nicht vom Neigungswinkel $\delta$ abhängt, was in Fig. 9 dargestellt ist. Im Gegensatz dazu ändert sich im Falle des orthographischen Projektionssystems beim Bewegen eines Objektes aus der optischen Achse des Systems heraus nur der Objektabstand $d'$, wohingegen der Bildabstand $d'_o$ konstant und gleich $d_o$ ist. Da der Objektabstand wieder durch die Gleichung (3) gegeben ist, kann die Bildhöhe $h'_o$ aus der Formel

$$h'_o = \frac{d_o h}{\sqrt{\dfrac{d^2}{\cos^2 \delta} + h^2}} \tag{6}$$

berechnet werden.

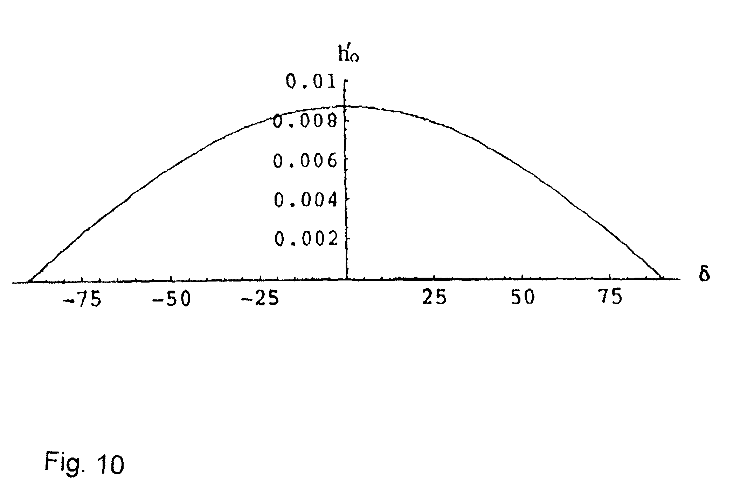

Eine Darstellung der Höhe $h'_o$ als Funktion des Winkels $\delta$ ist in Fig. 10 dargestellt. Es ist zu beachten, daß nun die Bildhöhe $h'_o$ kleiner wird, wenn sich das Objekt von der optischen Achse $y$ des Systems wegbewegt. Dies wird durch die Zunahme des Abstandes zwischen Objekt und Projektionssystem bewirkt. Dieses Phänomen ist ganz natürlich. Stellen wir uns z. B. vor, wir stünden vor einem sehr großen Gemälde, auf dem das Zeichen "a" mehrmals dargestellt ist. Es ist klar, daß die direkt vor uns stehenden Zeichen auf dem Gemälde viel größer erscheinen als die im Randbereich des Gemäldes befindlichen Zeichen.

Bisher haben wir die Abhängigkeit der Bildhöhe als Funktion der Projektion und der Parameter des beobachteten Objekts untersucht. Im Folgenden wollen wir den Bildwinkel $\alpha'_o$ bestimmen, aus dem ein Betrachter das Bild als Funktion der oben erwähnten Parameter sieht. Nehmen wir an, daß sich das Auge des Betrachters auf der optischen Achse $y$ des Projektionssystems im Abstand $d_{ob}$ von der Bildebene $x_o 0 y_o$ befindet. Das Objektabbild wird dann aus dem Winkel

$$\alpha'_{ob} = \arctan \frac{h'_o}{d'_{ob}}, \tag{7}$$

gesehen, wobei $h'_o$ für die geradlinige Projektion durch (5) und für die orthographische Projektion durch (6) definiert wird. Der Abstand $d'_{ob}$ ist bei geradliniger Projektion durch die Formel

$$d'_{ob} = \sqrt{d_{ob}^2 + d_o^2 \tan^2 \delta} \tag{8}$$

und bei orthographischer Projektion durch die Formel

$$d'_{ob} = \sqrt{d_{ob}^2 + \frac{d^2 d_o^2 \tan^2 \delta}{d^2 + h^2 \cos^2 \delta}} \tag{9}$$

zu ermitteln. Kombinieren wir diese Gleichungen mit Gleichung (7), so erhalten wir die endgültige Formel für den Blickwinkel

$$\alpha_{ob} = \arctan \frac{d_o h}{d \sqrt{d_{ob}^2 + d_o^2 \tan^2 \delta}} \tag{10}$$

für die geradlinige Projektion und

$$d_{ob} = \arctan \frac{d_o h}{\sqrt{\dfrac{d_{ob}^2 d^2 + d_{ob}^2 h^2 \cos^2 \delta + d^2 d_o^2 \tan^2 \delta}{\cos^2 \delta}}} \tag{11}$$

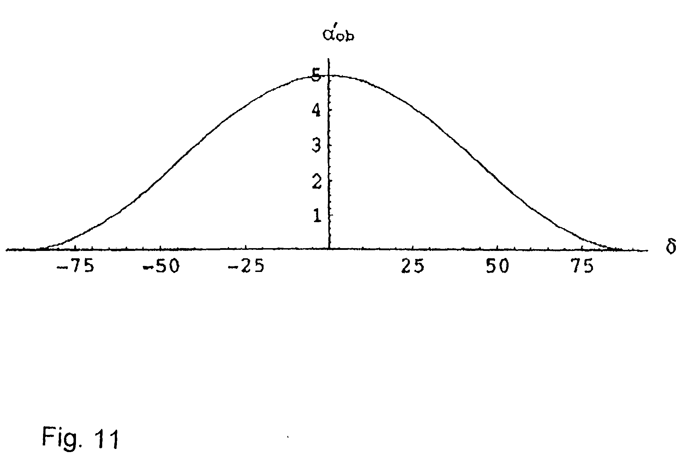

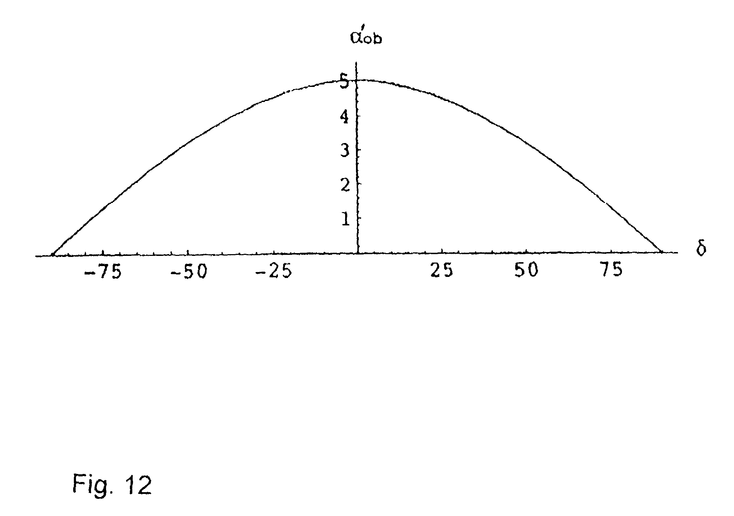

für die orthographische Projektion. Darstellungen für den Winkel $\alpha'_{ob}$ als Funktion des Winkels $\delta$ sind für die beiden Fälle in den Fig. 11 bzw. 12 dargestellt. Zur Erzeugung dieser Diagramme wurden Projektionssystem und Objektparameter so gewählt, daß das auf der optischen Achse y des Systems plazierte Objekt im Winkel von 5° betrachtet wird. Es ist einfach festzustellen, daß der Funktionsverlauf in beiden Fällen der gleiche ist - je größer der Abstand zwischen dem Objekt und der optischen Achse y des Systems, desto geringer die Bildhöhe. Zwischen beiden Fällen bestehen jedoch wichtige Unterschiede, auf die wir hinweisen wollen. Bei der geradlinigen Projektionsart reicht die Bildbreite bis Unendlich, wenn der Winkel $\delta$ 90° erreicht, wohingegen sie bei der orthographischen Projektionsart den Parameterwert $d_o$ nicht überschreitet. Außerdem ist klar, daß die reale Bildgröße durch die Optik des geradlinigen Projektionssystems verfälscht wird.

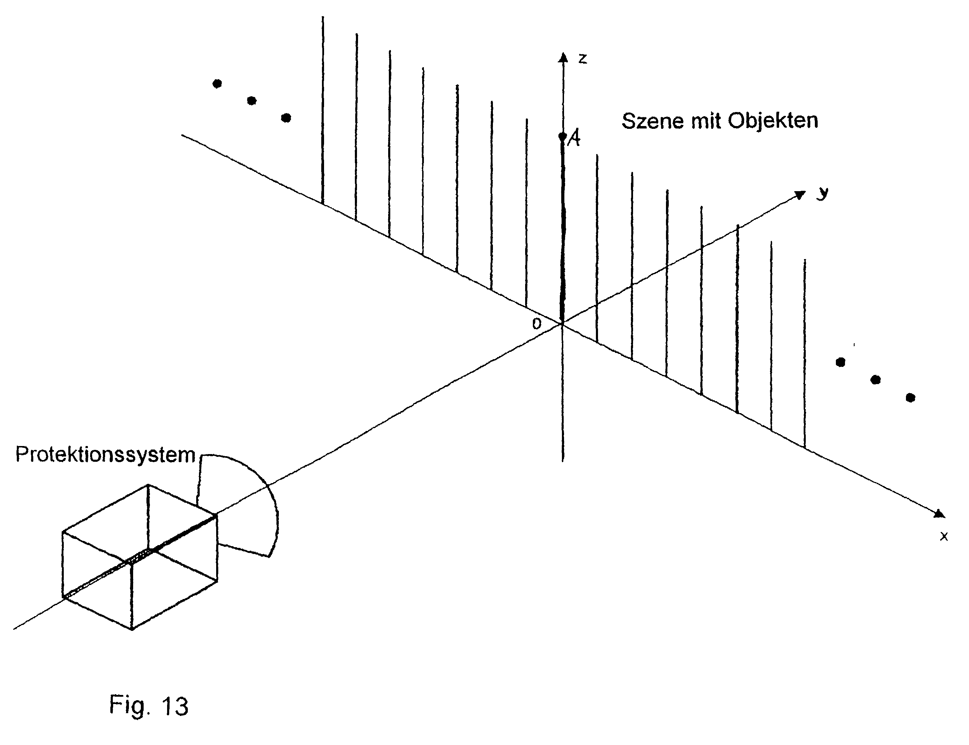

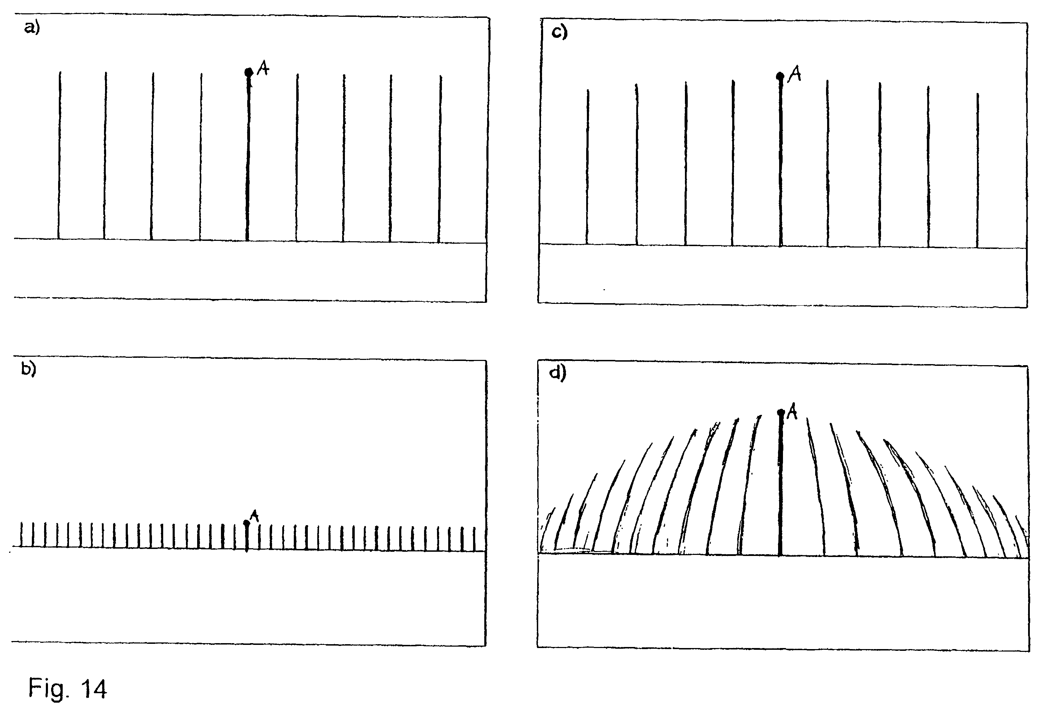

Wir versuchen nun einzuschätzen, wie die Merkmale des Projektionssystems das Aussehen des Ergebnisbildes beeinflussen. Stellen wir uns folgende Situation vor. Vor dem Projektionssystem, in einer senkrecht zur optischen Achse des Systems stehenden Ebene, befindet sich eine Reihe gleichlanger Stäbe (s. Fig. 13). Fig. 14 zeigt Abbildungen der in Fig. 13 dargestellten Szene mit unterschiedlichen Projektionssystemparametern. Man kann beobachten, daß bei Projektionssystemen mit kleinen Blickwinkeln fast kein Unterschied zwischen den mittels geradliniger bzw. orthographischer Projektion erzeugten Bildern festzustellen ist. Deutliche Unterschiede treten hervor, wenn große Blickwinkel der Projektionssysteme verwendet werden. In diesem Fall erhalten wir bei geradliniger Projektion ein Bild, auf dem alle Abbilder der Stäbe klein und von gleicher Höhe erscheinen, obwohl die direkt vor dem Projektionssystem stehenden Stäbe diesem viel näher sind als die seitlich angeordneten Stäbe. Die Verwendung des orthographischen Projektionssystems verhindert eine derartige Situation. Bei orthographischer Projektion erhalten wir ein Bild, auf dem die näher am System stehenden Stäbe größer abgebildet werden als die entfernteren.

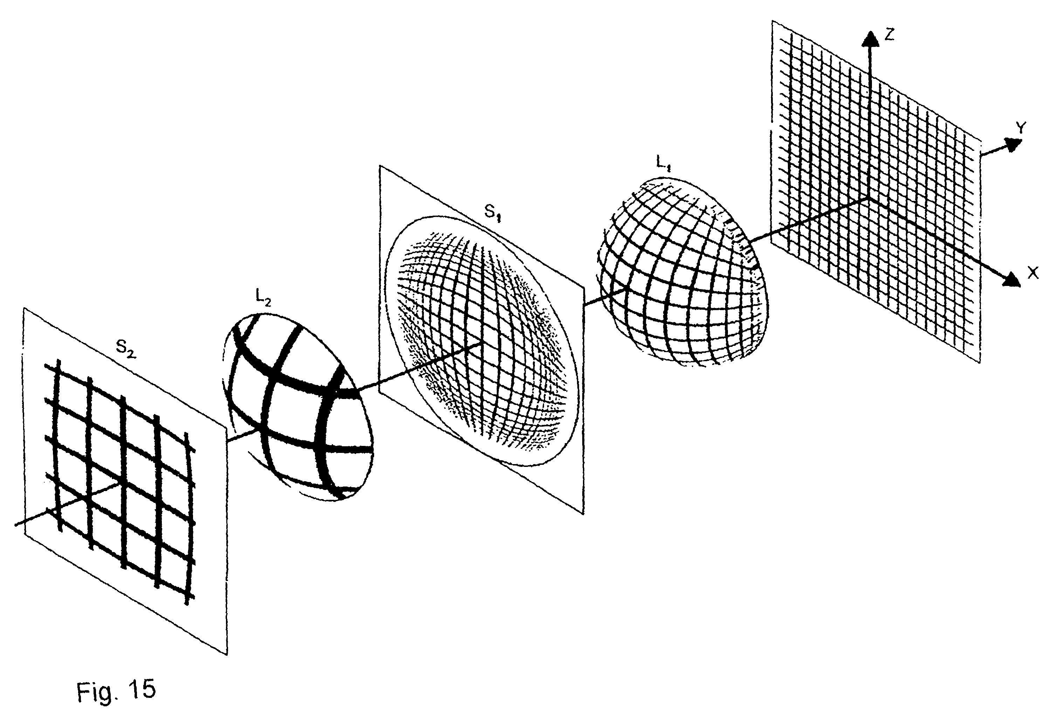

Der Bilderzeugungsprozeß im orthographischen Zoomlinsensatz weist zwei Phasen auf. In Phase 1 (s. Fig. 15) wird ein Zwischenbild auf einem virtuellen Bildschirm $S_1$ erzeugt. Dies geschieht mittels einer Linse (einem Linsensatz) $L_1$ vom "Fischaugentyp" mit einem Blickwinkel von 180° nach der orthographischen Projektionsregel. Ein derartiges Zwischenbild ist kreisförmig, wobei sich im zentralen Teil die Abbilder der Weltobjekte befinden, die nahe an der optischen Achse des Linsensatzes plaziert sind. In Phase 2 wird auf der Grundlage des Zwischenbildes ein Ergebnisbild auf dem Bildschirm $S_2$ erzeugt. Für diesen Zweck wird eine nach der geradlinigen Projektionsregel wirkende Beobachtungslinse (-linsensatz) $L_2$ mit einem gegebenen Blickwinkel (wesentlich geringer als 180°) verwendet. Das Hauptmerkmal des vorgeschlagenen Linsensatzes besteht darin, daß bei Änderung des Blickwinkels des Linsensatzes das Ergebnisbild von dem konstanten Zwischenbild erhalten wird, indem ein Teil davon oder das gesamte Bild ausgewählt und vergrößert wird. Wenn es durch den Linsensatz zu geometrischen Verzerrungen des Ergebnisbildes kommt, bleiben diese während des Zoomvorgangs konstant. Dieses Merkmal des Linsensatzes ist besonders wichtig und beeinflußt die Zuverlässigkeit des vom Videomischer gelieferten endgültigen Bildes.

Die Blickrichtung des orthographischen Zoomlinsensatzes ist durch dessen optische Achse, die Standpunktposition durch die Position der orthographischen Linse definiert, und der Blickwinkel des Satzes kann durch die Veränderung des Abstandes zwischen der Beobachtungslinse $L_2$ und dem virtuellen Bildschirm $S_1$ verändert werden. Es ist zu beachten, daß sich der Blickwinkel des vorgeschlagenen Linsensatzes theoretisch von 180° bis 0° verändern läßt.

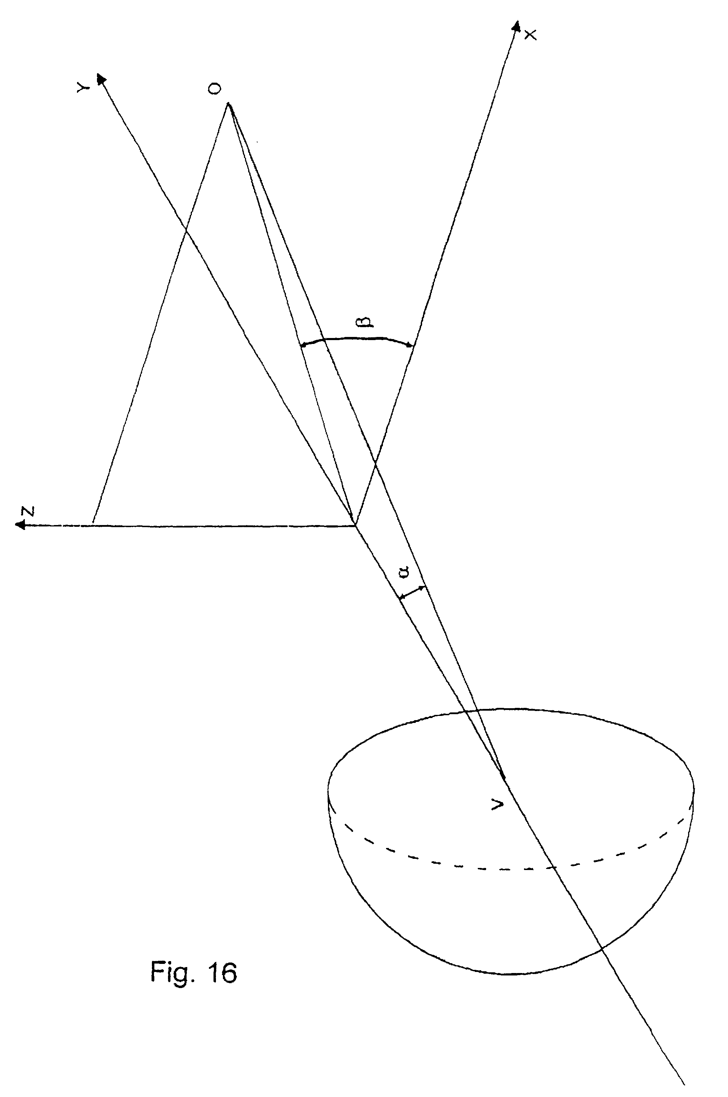

Zur Beschreibung der Richtung von Strahlen, die in den orthographischen Linsensatz einfallen, können wir ein Winkelpaar verwenden: einen rechten Einfallswinkel $\alpha$ und einen Ausfallswinkel $\beta$ (s. Fig. 16). Ohne Verlust der Allgemeingültigkeit ermöglicht es diese Darstellung, die Analyse mit einem zweidimensionalen Modell (in der Ebene $OvY$) fortzusetzen, das man durch die Festsetzung des Winkels $\beta$ erhält.

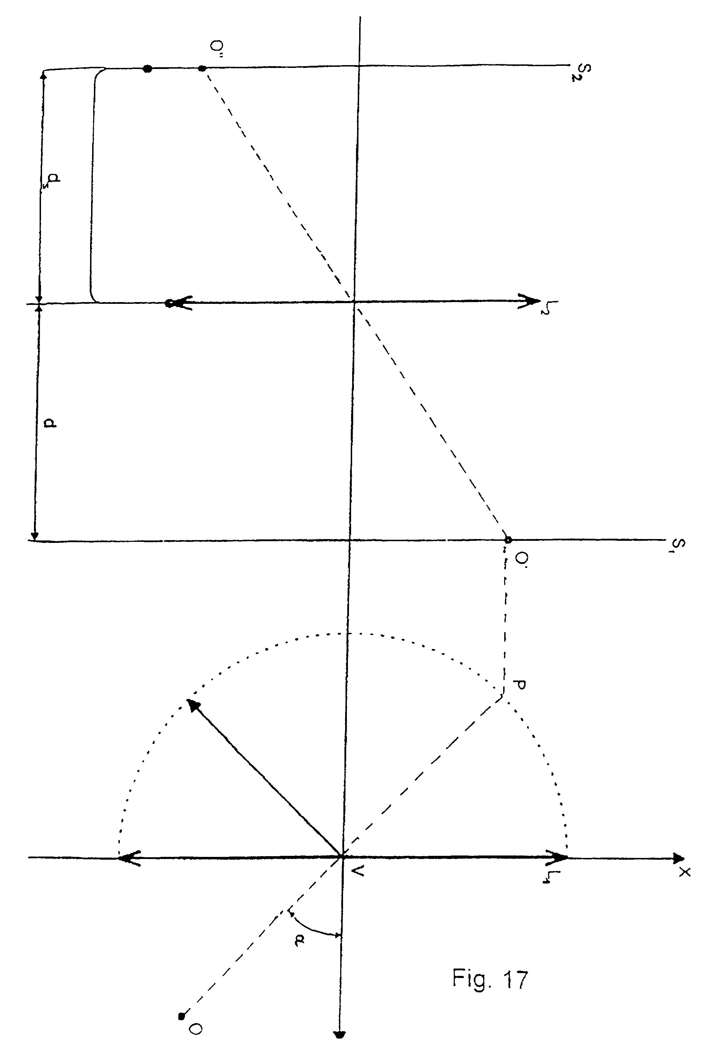

Es folgt eine mathematische Beschreibung des Prozesses zur Erzeugung des Ergebnisbildes.
Unter der obigen Annahme können wir $\beta$ auf 0 setzen. Wenn nun ein gegebener Punkt vom orthographischen Zoomlinsensatz mit einem Blickwinkel $\alpha$ gesehen wird (s. Fig. 17), besitzt sein Bild auf dem virtuellen Bildschirm $S_1$ die Höhe

$$O'' = \frac{d_s}{d}O' = \frac{d_s}{d}r \sin \alpha. \tag{12}$$

wobei r einen Radius darstellt, der die angewandte orthographische Projektion charakterisiert. Diesem Punkt entspricht ein Punkt auf dem Ergebnisbildschirm $S_2$ in der Höhe

$$O' = P = r \sin \alpha, \tag{13}$$

Die Berechnung des Blickwinkels des orthographischen Zoomlinsensatzes geschieht folgendermaßen:

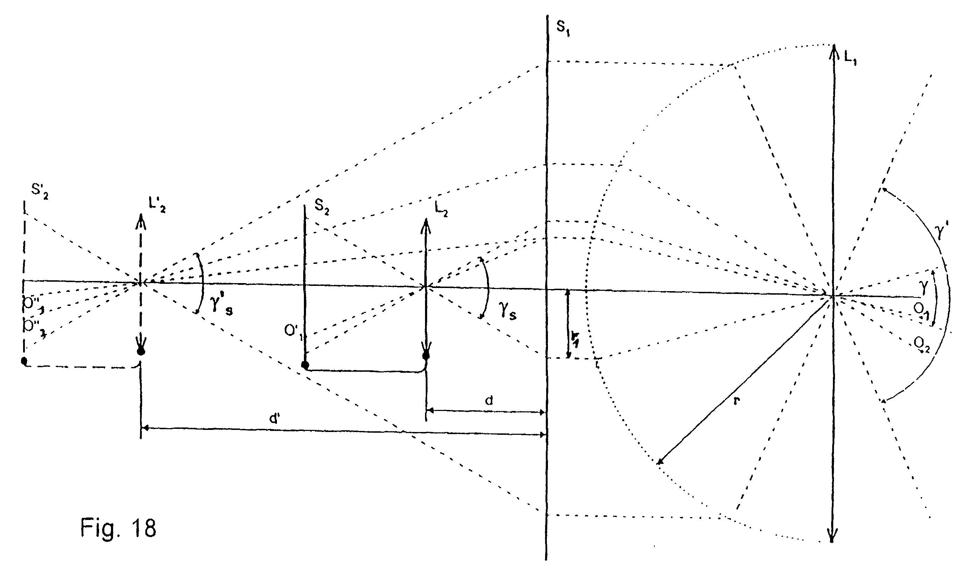

Die Linse L2 sei charakterisiert durch den maximalen Blickwinkel $\gamma_o$ (s. Fig. 18). Wenn sie im Abstand d vom virtuellen Bildschirm $S_1$ plaziert wird, befindet sich ein kreisförmiger Ausschnitt dieses Bildschirms mit dem Radius

$$r_1 = d \tan\frac{1}{2}\gamma_s \tag{14}$$

im Blickbereich der Linse. Innerhalb dieses Bereiches befinden sich Abbilder von Objekten, die durch die Linse $L_1$ bei einem Winkel von nicht mehr als

$$\gamma = 2\arcsin\left(\frac{\tan\frac{1}{2}\gamma_s}{r}d\right). \tag{15}$$

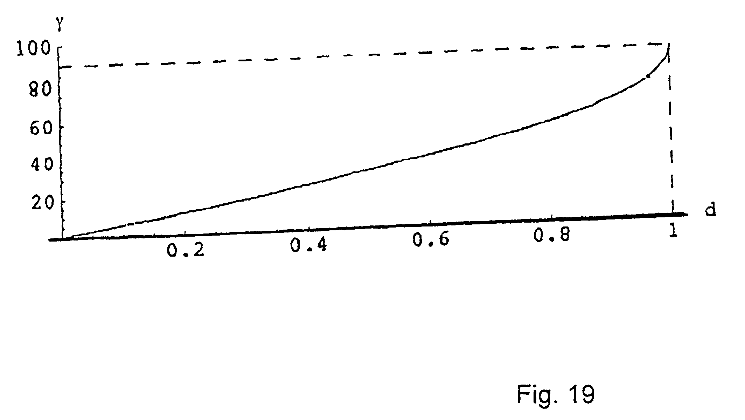

gesehen werden. Dies ist gleichzeitig ein Blickwinkel des gesamten Zoomlinsensatzes. Wir weisen darauf hin, daß die Werte $\gamma_o$ i $r$ Konstanten sind, die den Linsensatz charakterisieren, und daß der Abstand d die einzige Variable ist, die den Blickwinkel des Linsensatzes beeinflußt. Fig. 19 verdeutlicht die Abhängigkeit des Blickwinkels $\gamma$ des Zoomlinsensatzes vom Abstand $d.$

Wenn der Winkel $\gamma_o$ für die Linse $L_2$ als horizontaler, vertikaler oder diagonaler Blickwinkel definiert wird, wird auch der oben berechnete Blickwinkel des Linsensatzes horizontal, vertikal bzw. diagonal definiert.

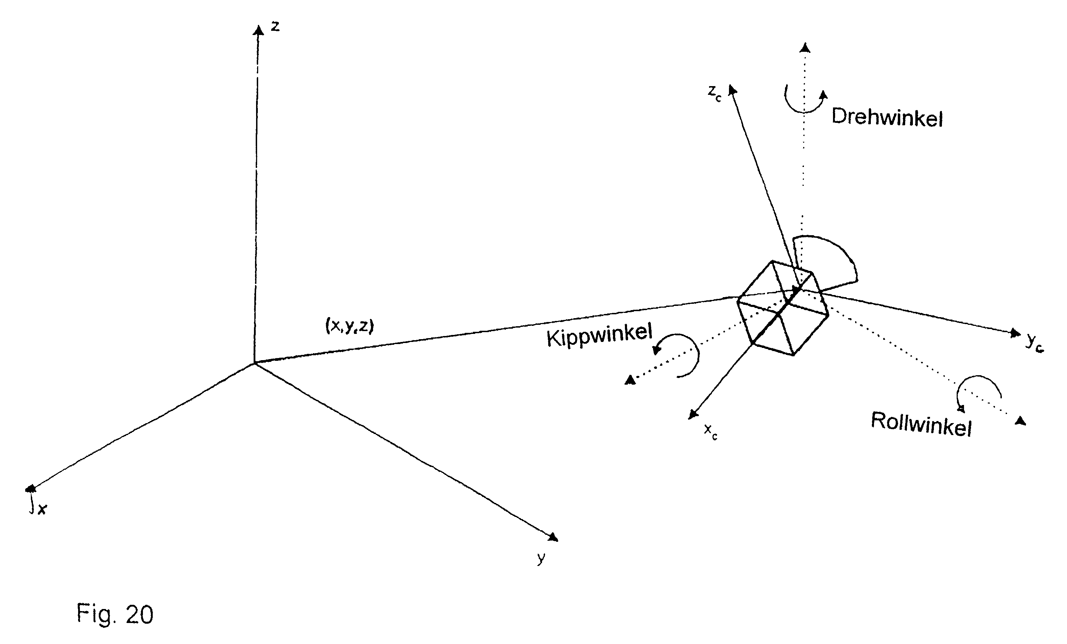

Nachfolgend wird die Funktion des Kamerabewegungssteuersystems beschrieben. Der zu einem gegebenen Zeitpunkt von einer Kamera erfaßte Bereich definiert sich durch den aktuellen Kamerablickwinkel, den aktuellen Kamerastandpunkt und die aktuelle Kameraausrichtung. Das Kamerabewegungssteuersystem wird verwendet, um die erwähnte Position und Ausrichtung der Kamera zu ändern. Es ermöglicht die Steuerung aller drei Positionskomponenten des Kamerastandpunktes, der im kartesischen System durch einen Vektor (x, y, z) bestimmt wird, sowie die Steuerung der Blickrichtung der Kamera durch die Änderung der drei durch TRP (Kippen, Rollen, Drehen; engl. tilt, roll, pan) definierten Drehwinkel (s. Fig. 20). Mit Hilfe des Kamerabewegungssteuersystems ist es möglich, die Position und Ausrichtung sowohl optischer Linsenkameras als auch CG-Linsenkameras zu verändern. Der Unterschied zwischen optischen (realen) und CG (virtuellen) Kameras besteht darin, daß im Fall der realen Kamera die Konfiguration einer mechanischen Vorrichtung (Manipulator), an der die Kamera befestigt ist, verändert wird, während im Fall der virtuellen Kamera die jeweiligen Matrizen für die Kameraausrichtung und - position Veränderungen unterliegen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

**Patentansprüche**

1. Cptisches Abbildungssystem zur Abbildung eines Objekts mit stufenlos einstellbarer Vergrößerung, aufweisend:

   Mittel zur Erzeugung einer orthographischen Projektion des Objektes in einer Bildebene (4), eine Abbildungsebene (6) zur Darstellung eines von dem Objekt herrührenden Bildbereiches, einer objektseitig vor der Abbildungsebene (6) angeordneten Abbildungsoptik (5) mit vorzugsweise fester Brennweite zur Erzeugung des Bildbereiches auf der Abbildungsebene (6), wobei die Abbildungsoptik (5) und/oder die Abbildungsebene (6) zur Einstellung der Vergrößerung und/oder zur Fokussierung des auf der Abbildungsebene (6) erscheinenden Bildes in Richtung der optischen Achse verschiebbar angeordnet sind und
   im Bereich der Abbildungsebene ein Bildbereich unterschiedlicher Vergrößerung erzeugt wird.

2. Optisches Abbildungssystem nach einem der vorhergehenden Ansprüche,
   **dadurch gekennzeichnet,**
   **daß** in der Abbildungsebene (6) ein Film oder ein CCD-Sensorelement vorgesehen ist.

**3.** Optisches Abbildungssystem nach einem der vorhergehenden Ansprüche,
dadurch gekennzeichne$_t$.
daß zur Fokussierung des Bildes in der Abbildungsebene ( 6) eine automatische Scharfeinstellvorrichtung vorgesehen ist.

**4.** Grafische Benutzerschnittstelle als Teil eines Computersystems zur Erzeugung von Abbildern von Objekten der realen Welt, der virtuellen Welt sowie gegebenenfalls weiterer Computeranwendungen, wobei die Bestandteile eines auf einer Schnittstellen-Ausgabeplattform darzustellenden Bildes von einem Kamerasatz erzeugt werden, der unter Verwendung von orthographischen Abbildungssystemen gemäß Anspruch 1 konstruiert ist und der Kamerasatz reale Kameras, die auf Objekte der realen Welt gerichtet sind, und virtuelle, mit Hilfe von Computer-Erweiterungskarten geschaffene Kameras, die virtuelle Objekte und gegebenenfalls Computeranwendungen betreffen, umfaßt und die vom Kamerasatz erzeugten Bilder in einen Videomischer eingegeben und verarbeitet werden und die vom Videomischer erzeugten fertigen Bilder dann an die Schnittstellen-Ausgabeplattform geschickt werden, wobei die Kamerapositionen von einem Kamera-Bewegungssteuersystem gesteuert werden.

**5.** Grafische Benutzerschnittstelle nach Anspruch 4,
**dadurch gekennzeichnet,**
**daß** zusätzlich zu den orthographischen Abbildungssystemen deren orthographisch virtuelle Modelle verwendet werden.

**6.** Grafische Benutzerschnittstelle nach Anspruch 4,
**dadurch gekennzeichnet,**
**daß** die Schnittstellen-Ausgabeplattfcrm ein Monitor und der Videomischer ein Bestandteil der Schnittstelle ist.

**7.** Grafische Benutzerschnittstelle nach Anspruch 4,
**dadurch gekennzeichnet,**
**daß** die Kameras CG-Linsenkameras in Form von Computer-Erweiterungskarten mit entsprechender Software sowie optische Linsenkameras in Form realer Kameras sind und die Kameras orthographische Abbildungssysteme aufweisen.

**8.** Grafische Benutzerschnittstelle nach Anspruch 4,
**dadurch gekennzeichnet,**
**daß** das Kamera-Bewegungssteuersystem mindestens eine Computer-Erweiterungskarte mit entsprechender Software aufweist, mechanische Manipulatoren sum Betrieb der optischen Linsenkameras angeordnet sind und zur Steuerung der virtuellen CG-Linsenkameras die jeweiligen Matrizenfür die Kameraausrichtung und -position verändert wird, wodurch sich beide im System verwendeten Kameratypen - virtuelle und reale -beliebig positionieren lassen und so beliebige Bewegungsabläufe komponiert werden können.

**9.** Grafische Benutzerschnittstelle nach Anspruch 4,
**dadurch gekennzeichnet,**
**daß** Schnittstellen-Eingabeplattformen angeordnet sind, welche aus grundlegenden Eingabegeräten wie Tastaturen, Mäusen, Joysticks usw. oder komplizierteren Geräten wie Sprachanalysatoren, die Meldungen zur Steuerung des Systems über die Schnittstelle erzeugen, bestehen.

**10.** Grafische Benutzerschnittstelle nach Anspruch 4
**dadurch gekennzeichnet,**
**daß** der Bilderzeugungsprozeß im orthographischen Abbildungssystem zwei Phasen aufweist, wobei in Phase 1 ein Zwischenbild auf einem virtuellen Bildschirm ($S_1$ )und in Phase 2 auf der Grundlage des Zwischenbildes ein Ergebnisbild auf dem Bildschirm ($S_2$ ) erzeugt wird.

**11.** Grafische Benutzerschnittstelle nach Anspruch 10,
**dadurch gekennzeichnet,**
**daß** das Zwischenbild auf dem virtuellen Bildschirm $S_1$ mittels einer Linse oder einem Linsensatz L; mit einem Blickwinkel von 180° nach der orthographischen Projektionsregel erzeugt wird und ein derartiges Zwischenbild kreisförmig ausgebildet ist, wobei sich im zentralen Teil die Abbilder der Weltobjekte befinden, die nahe an der optischen Achse des Linsensatzes plaziert sind.

**12.** Grafische Benutzerschnittstelle nach Anspruch 10,

**dadurch gekennzeichnet,**
**daß** das Ergebnisbild auf dem Bildschirm $S_2$ mittels einer nach der geradlinigen Projektionsregel wirkende Beobachtungslinse oder eines Linsensatzes $L_2$ mit einem gegebenen Blickwinkel wesentlich geringer als 180° erzeugt wird.

**Claims**

1. An optical imaging system for reproducing an object with an infinitely variable magnification, comprising means for producing an orthographic projection of the object in an image plane (4), an imaging plane (6) for representing an image region originating from the object, imaging optics (5) disposed on the object side in front of the imaging plane (6) with preferably a fixed focal length for producing the image region on the imaging plane (6), the imaging optics (5) and/or the imaging plane (6) being disposed so that they can be moved in the direction of the optical axis for adjusting the magnification and/or for focusing the image appearing on the imaging plane (6), and an image region of different magnification being produced in the region of the imaging plane.

2. The optical imaging system of one of the preceding claims, **characterized in that** a film or a CCD sensor element is provided in the imaging plane (6).

3. The optical imaging system of one of the preceding claims, **characterized in that** an automatic focusing device is provided for focusing the image in the imaging plane (6).

4. A graphical user interface as part of a computer system for producing reproductions of objects of the real world, the virtual world as well as, optionally, further computer applications, the components of an image, which is to be represented on an interface output platform, being generated by a camera set, which is constructed using orthographic imaging systems of claim 1, and the camera set comprising real cameras, which are directed onto objects of the real world, and virtual cameras, which are created with the help of computer expansion cards and relate to virtual objects, and optionally computer applications and the images, generated by the camera set, being supplied to a video mixer and processed and the finished pictures, generated by the video mixer, then being sent to the interface output platform, the camera positions being controlled by a camera movement control system.

5. The graphical user interface of claim 4, **characterized in that**, in addition to the orthographic imaging systems, their orthographic virtual images are used.

6. The graphical user interface of claim 4, **characterized in that** the interface output platform is a monitor and the video mixer is a component of the interface.

7. The graphical user interface of claim 4, **characterized in that** the cameras are CG lens cameras in the form of computer expansion cards with appropriate software as well as optical lens cameras in the form of real cameras and **in that** the cameras have orthographic imaging systems.

8. The graphical user interface of claim 4, **characterized in that** the camera movement control system has at least one computer expansion card with appropriate software, **in that** mechanical manipulators are disposed for operating the optical lens camera and **in that**, for controlling the virtual CG lens camera, the respective matrixes for the camera alignment and position are changed, as a result of which both types of cameras, virtual and real, used in the system, can be positioned at will and movement courses can be composed at will in this manner.

9. The graphical user interface of claim 4, **characterized in that** interface input platforms are disposed, which consist of basic input devices, such as keyboards, mice, joysticks, etc. or of more complicated equipment, such as speech analyzers, which generate messages for controlling the system over the interface.

10. The graphical user interface of claim 4, **characterized in that** the image generating process in the orthographic imaging set has two phases, an interim image being generated in phase 1 on a virtual screen $S_1$ and, on the basis of the interim image, a resultant image being generated on the screen $S_2$ in phase 2.

11. The graphical user interface of claim 10, **characterized in that** the interim image is generated on the virtual screen $S_1$ by means of a lens or a lens set $L_1$ with a viewing angle of 180° according to the orthographic projection rule and **in that** such an interim image is circular, reproductions of world objects, which are placed close to the optical axis of the lens set, being in the central part.

12. The graphical user interface of claim 10, **characterized in that** the resultant image is generated on the screen S2 by means of an observation lens acting according to the linear projection rule or a lens set $L_2$ with a given viewing angle, which is significantly smaller than 180°.

**Revendications**

1. Système de représentation optique pour la représentation d'un objet avec agrandissement réglable de manière continue, présentant :

    des moyens de production d'une projection orthogonale de l'objet sur un plan d'image (4), un plan de représentation (6) pour la représentation d'un champ d'image provenant de l'objet, une optique de représentation (5) disposée devant le plan de représentation par rapport à l'objet, avec une distance focale préférentiellement fixe pour la production du champ d'image sur le plan de représentation (6), l'optique de représentation (5) et/ou le plan de représentation (6) pour le réglage d'agrandissement et/ou pour la focalisation de l'image apparaissant sur le plan de représentation (6) étant déplaçables dans le sens de l'axe optique, et un champ d'image d'agrandissement différencié étant produit au niveau du plan de représentation.

2. Système de représentation optique selon l'une des revendications précédentes, **caractérisé en ce qu'**un film ou un élément senseur CCD est prévu dans le plan de représentation (6).

3. Système de représentation optique selon l'une des revendications précédentes, **caractérisé en ce qu'**un mécanisme de focalisation automatique est prévu pour la focalisation de l'image dans le plan de représentation (6).

4. Interface graphique d'utilisateur en tant qu'élément d'un système informatique pour la production d'images d'objets du monde réel, du monde virtuel et éventuellement d'autres applications informatiques, les composants d'une image à représenter sur une plate-forme de sortie d'interface étant produits par un jeu de caméras construit en utilisant des systèmes de représentation orthogonale selon la revendication 1, et le jeu de caméras comprenant des caméras réelles orientées vers des objets du monde réel ainsi que des caméras virtuelles créées au moyen de cartes d'extension informatiques, relatives à des objets virtuels et à d'éventuelles applications informatiques, les images produites par le jeu de caméras étant introduites et traitées dans un mélangeur vidéo et les images finales produites par le mélangeur vidéo adressées ensuite à la plate-forme de sortie d'interface, les positions de caméra étant fixées par un système de commande de déplacement de caméra.

5. Interface graphique d'utilisateur selon revendication 4, **caractérisée en ce qu'**en complément du système de représentation orthogonale, il est recouru aux modèles orthogonaux virtuels de celui-ci.

6. Interface graphique d'utilisateur selon revendication 4, **caractérisée en ce que** la plate-forme de sortie d'interface est un moniteur, et le mélangeur vidéo un composant de l'interface.

7. Interface graphique d'utilisateur selon revendication 4, **caractérisée en ce que** les caméras sont des caméras à lentille CG sous forme de cartes d'extension informatiques à logiciel correspondant ainsi que des caméras à lentille optique sous forme de caméras réelles, et **en ce que** les caméras présentent des systèmes de représentation orthogonale.

8. Interface graphique d'utilisateur selon revendication 4, **caractérisée en ce que** le système de commande de déplacement de caméra présente au moins une carte d'extension informatique à logiciel correspondant, que des manipulateurs mécaniques sont disposés pour le fonctionnement des caméras à lentille optique et que les matrices respectives d'orientation et de positionnement de caméra sont modifiées pour la commande des caméras virtuelles à lentille CG , les deux types de caméras utilisés pour le système - caméras réelles et virtuelles - pouvant être positionnés de manière quelconque et des schémas de déplacement pouvant ainsi être composés à volonté.

**9.** Interface graphique d'utilisateur selon revendication 4,
**caractérisée en ce que** des plates-formes d'entrée d'interfaces sont disposées, lesquelles consistent en appareils simples de saisie tels que claviers, souris, joysticks, etc., ou en appareils complexes tels qu'analyseurs vocaux produisant des messages pour la commande du système via l'interface.

**10.** Interface graphique d'utilisateur selon revendication 4,
**caractérisée en ce que** le procès de production d'image dans le système de représentation orthogonale présente deux phases, une image intermédiaire étant produite sur un écran virtuel ($S_1$) en phase 1, et une image-résultat étant produite à partir de l'image intermédiaire sur l'écran ($S_2$) en phase 2.

**11.** Interface graphique d'utilisateur selon revendication 10,
**caractérisée en ce que** l'image intermédiaire sur l'écran virtuel $S_1$ est produite au moyen d'une lentille ou d'un jeu de lentilles $L_1$ avec un angle de visée de 180° suivant la règle de projection orthogonale, et **en ce qu'**une telle image intermédiaire est produite avec une forme circulaire, les représentations des objets du monde placés à proximité de l'axe optique du jeu de lentilles se trouvant en partie centrale.

**12.** Interface graphique d'utilisateur selon revendication 10,
**caractérisée en ce que** l'image-résultat sur l'écran $S_2$ est produite au moyen d'une lentille d'observation agissant suivant la règle de projection en ligne droite ou d'un jeu de lentilles $L_2$ à angle de visée donné sensiblement inférieur à 180°.

Fig.1

Fig.2

Fig.3

Fig. 4

Fig. 5

Fig. 6

Fig. 7

Fig. 8

EP 0 976 003 B1

Fig. 9

Fig. 10

EP 0 976 003 B1

Fig. 11

EP 0 976 003 B1

Fig. 12

EP 0 976 003 B1

Szene mit Objekten

x

y

z

A

O

Protektionssystem

Fig. 13

Fig. 14

Fig. 15

Fig. 16

Fig. 17

Fig. 18

Fig. 19

Fig. 20

EP 0 976 003 B1